Europäisches Patentamt

European Patent Office

Office européen des brevets

(19)

(11) Publication number: **0 043 595**

**B1**

## EUROPEAN PATENT SPECIFICATION

(45) Date of publication of patent specification: **11.01.84**

(51) Int. Cl.³: **A 01 G 31/02**

(21) Application number: **81106323.9**

(22) Date of filing: **31.07.79**

(60) Publication number of the earlier application in accordance with Art. 76 EPC: **0010836**

(54) Apparatus for growing hydroponic grass from cereal grain seeds.

(30) Priority: **09.10.78 GB 3975478**

(43) Date of publication of application:
**13.01.82 Bulletin 82/2**

(45) Publication of the grant of the patent:
**11.01.84 Bulletin 84/2**

(84) Designated Contracting States:
**AT BE CH DE FR IT LU NL SE**

(56) References cited:
**FR - A - 1 066 645**
**FR - A - 1 266 589**
**US - A - 2 928 211**
**US - A - 3 420 446**
**US - A - 3 458 951**

(73) Proprietor: **TOMBRA-RODAN SOCIEDAD ANONIMA**
**Calle Elvira Mendez No. 10/2 piso**
**Panama-City (PA)**

(72) Inventor: **Brady, John Richard**
**General Martinez Campos 20**
**Madrid-10 (ES)**

(74) Representative: **Smith, Norman Ian et al,**
**F.J. CLEVELAND & COMPANY 40-43 Chancery Lane**
**London WC2A 1JQ (GB)**

Courier Press, Leamington Spa, England.

# Apparatus for growing hydroponic grass from cereal grain seeds

This invention relates to the growth of hydroponic grass from cereal grain seeds.

Apparatus and methods for growing grass from cereal grains are well known. For example, see US-A-2,928,211, issued 15th March 1960 to Ivan Z. Martin.

Prior art hydroponic grass-growing apparatus generally included an enclosure, a rack for supporting seed-filled trays in the enclosure, a sump for containing a quantity of the hydroponic nutrient solution, means for periodically withdrawing and supplying the nutrient solution to the seed bed, and fixtures within the enclosure for supplying light to the plants growing from the seed bed. In later variations of such equipment, the enclosure was hermetically sealed and heating and cooling units were provided to maintain desired temperature and humidity conditions within the enclosure.

While the prior art apparatus is capable of growing hydroponic grass of acceptable quality and at acceptable production rates for short periods of time under ideal ambient conditions and utilising exceptionally skilled operators, the hydroponic grass machines and methods of the prior art proved to be unacceptable on a practical basis due to a series of interrelated mechanical and operational difficulties, under extreme ambient temperature conditions and in areas of the world where highly skilled operating and maintenance personnel are unavailable.

The principal problems associated with the prior art methods and apparatus for growing hydroponic grass may be summarised as follows.

First, acceptable production rates were difficult to achieve, even on a short-term basis, because of the difficulty of evenly distributing the hydroponic nutrient solution over the entire seed bed. Thus, certain areas of the seed bed would receive insufficient solution and the seeds would not germinate properly and the grass from those seeds which did germinate was stunted and of very poor quality. In other areas, the seed bed received too much nutrient solution and did not drain properly, thereby causing the seeds to decay before property germination and exacerbating the mold growth problem which will be described below.

Another serious problem which was encountered by prior workers was the tendency of molds to form in the germinating seed bed and on the root mass of the growing plants. These molds not only reduced the germination rate of the seeds, but also caused decay and disintegration of the root mass of the growing grass plants, reducing the grass production rate and causing the animals to reject the grass as food.

In an attempt to increase production rate, prior workers provided hermetically sealed enclosures for the seed beds to increase the humidity and promote rapid plant growth. Substantially simultaneously, heaters and cooling units were provided to maintain the temperature conditions within the enclosures at optimum plant growth levels.

The introduction of controlled temperature and humidity conditions further exacerbated the mold problem in that the conditions most favourable for optimum grass plant growth were also most favourable for mold growth.

Finally, difficulties were often experienced by prior workers in preparing and maintaining hydroponic nutrient solutions having the proper balance of plant nutrient elements. In this connection it is well known that plants and particularly grass plants grow at increased rates when they obtain a properly balanced combination of essential plant growth nutrients, such as phosphates and nitrogen, and when they are provided with essential trace metal nutrients. This information is well documented in the fertilizer arts and will not be discussed in further detail at this point, except to point out that the problem of proper plant nutrition is inextricably related to the problems of low production rate mentioned above in hydroponic grass growing apparatus as failure to provided the seeds and the growing grass with proper major and trace nutrients restricts germination and grass growth rate, lengthening the growing cycle and increasing the probability that molds will form and grow in the hydroponic growing chamber, which even further reduces the production rate of the apparatus.

US—A—2928211 discloses a hydroponic grass growing unit including floor, ceiling and side walls defining an enclosure, means in said enclosure for supporting a plurality of substantially horizontal seed bed trays in side-by-side relationship and extending inwardly from said side walls to form elongate rows thereof along said side walls, said rows being spaced vertically apart from the floor to the ceiling of said enclosure, a sump in said floor for containing a hydroponic nutrient solution, means for periodically withdrawing a quantity of solution from said sump in excess of that required to saturate the seeds in said trays and the grass plants growing therefrom and for applying said excess quantity thereto, and means for supplying light to said growing plants, characterised in that said means for withdrawing said solution and applying it to said seeds and grass plants includes a plurality of spray nozzles for projecting a substantially flat diverging spray pattern in a plane substantially parallel to said trays, the spray pattern for each one of said rows of trays being provided by a plurality of said nozzles. The invention is characterized in that the nozzles are spaced above said row and just below the row stacked vertically thereabove, the nozzles for each one of said rows being spaced horizontally along one edge of said row to project said solution toward the opposite edge thereof, said horizontally spaced nozzles being angularly directed toward a next-adjacent nozzle such that the spray patterns from pairs of adjacent nozzles converge above said row forming an interference pattern, causing said nutrient solution to form a fine mist which settles uniformly upon the seeds and plants in the row therebelow.

The invention will be described now by way of example only with particular reference to the accompanying drawings. In the drawings:

Figure 1 is a partial cut away perspective view of a hydroponic grass growing unit embodying the features of the present invention;

Figure 2 is a partial elevation view showing certain details of the nutrient supply piping and lighting fixture details of the unit of Figure 1;

Figure 3 is a partial sectional view taken at right angles to the sectional view of Figure 2;

Figure 4 is a partial sectional plan view of the portion of the unit illustrated in Figures 2 and 3, taken along section line 4—4 thereof;

Figure 5 is an elevational view showing a typical one of the spray nozzles mounted on its nutrient supply conduit;

Figure 6 is as plan view of the nozzle and nutrient spray conduit of Figure 5, illustrating the preferred angular relationships thereof;

Figure 7 is a perspective view of one of the tray support posts of the unit of Figure 1;

Figure 8 is a partial cut-away perspective view of one of the light fixtures of the unit of Figure 1, and

Figure 9 is a plan sectional view of the unit of Figure 1 with all other components except the lighting fixtures omitted to illustrate the placement of the fixtures within the unit.

The description will be given with reference to three separate but interrelated improvements in prior art hydroponic grass growing apparatus, which improvements have the combined effect of effectively eliminating mold growth and of increasing plant growth rate, both of which effectively increase the hydroponic grass production rate.

Such apparatus typically included floor, ceiling and side walls defining an enclosure, means in the enclosure for supporting a plurality of substantially horizontal seed bed trays in side-by-side relationship, extending inwardly from the side walls and forming elongate rows therealong, the rows being spaced vertically apart from the floor to the ceiling of the enclosure. A sump is provided for containing a hydroponic nutrient solution and means for periodically withdrawing a quantity of the solution from the sump in excess of the quantity required to saturate the seeds in the trays and the grass plants growing therefrom and for applying this excess quantity to the seeds and the grass plants. Further, means are provided for supplying light to the growing plants.

According to one of the improvements, the means for withdrawing the solution and applying it to the seeds and grass plants include a plurality of spray nozzles for projecting a substantially flat diverging spray pattern in a plane substantially parallel to the trays. The spray pattern for each one of the rows of trays is provided by a series of nozzles spaced above the row and just below the row stacked vertically thereabove. The nozzles for each one of the rows are spaced horizontally along an edge of the row to project the nutrient solution toward the other edge thereof. The horizontally spaced nozzles for each row are angularly directed toward a next-adjacent nozzle, such that the spray patterns from pairs of adjacent nozzles converge above the row forming an interference pattern, causing the nutrient solution to form a fine mist which settles uniformly upon the seeds and the plants in the row therebelow.

According to the present embodiment the horizontally spaced nozzles which form the interference spray pattern for each of the rows of seed bed trays are carried by horizontal nutrient distribution manifolds. The manifolds are supported on stand-offs from the side walls to space the manifold inwardly therefrom a distance sufficient to permit hand-cleaning the side walls behind the horizontal manifolds.

Another of the improvements in the prior art hydroponic grass-growing apparatus described above relates to the structure for supporting the seed bed trays. The improved structure comprises a plurality of vertical support posts extending between the floor and the ceiling of the enclosure and spaced inwardly from the side walls of the enclosure a distance less than the length of the trays. The support posts are spaced horizontally along the length of the rows and carry a plurality of horizontal vertically spaced rails. The vertical spacing of the rails is equal to the desired vertical spacing of the rows of seed bed trays, the front ends of which are supported on the rails. Means carried by the side walls of the enclosure support the rear end of the seed bed trays.

In the preferred embodiment the means for supporting the rear ends of the seed-growing trays comprise an upwardly opening horizontal channel member, one side of which is sealingly engaged and affixed to the side wall of the enclosure and the upper edge of the other side of the channel forms a support for the rear edges of the seed bed trays in each of the rows. The channel functions to receive excess nutrient solution draining from the rear edges of the trays, to prevent the excess nutrient solution from falling onto the trays in the next row therebelow.

A third improvement in the apparatus is that the means for supplying light to the growing plants comprise a plurality of vertically elongate, hermetically sealed fluorescent fixtures having translucent side and front walls which permit transmission of light from elongate fluorescent light bulbs which are enclosed within the fixture and supported on the back thereof. Stand-off members which are sealingly engaged with and which extend inwardly from the side walls are provided to support the fixtures in operative position. The length of the stand-offs is sufficient to permit hand-cleaning of the side walls behind the fixtures and the backs of the fixtures.

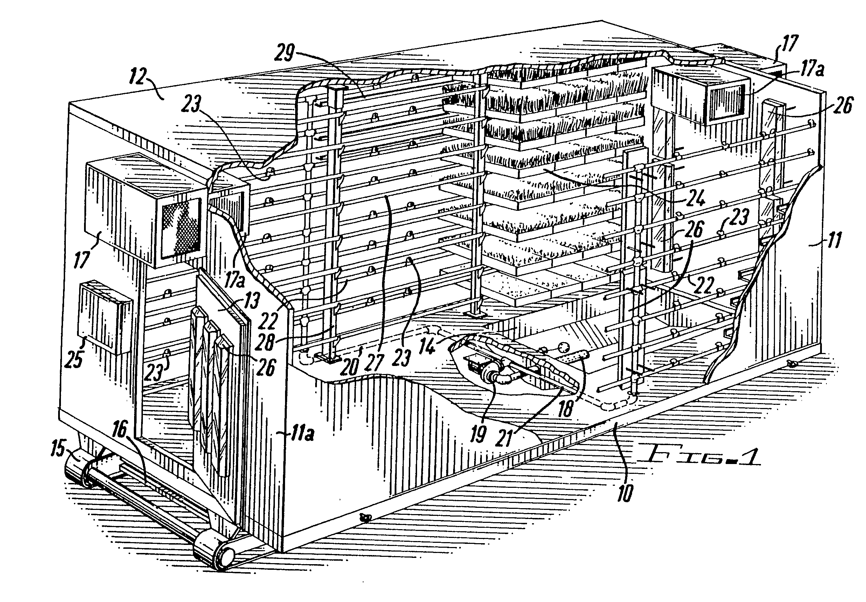

Turning now to the drawings, a hydrophonic growing apparatus is depicted for purposes of illustration in Figure 1 as a cut-away perspective view in which certain of the elements described above are omitted for purposes of clarity of illustration. The grass growing unit of Figure 1 consists of a floor 10, side walls 11 and 11a, and a ceiling 12, which are joined at their respective common edges to form the enclosure. The floor, side walls and ceiling are sandwich panels consisting of mold-formed polyester-impregnated fibreglass sheets bonded with resin to a core of expanded PVC. The resulting structure has very high mechanical integrity and provides excellent insulation qualities. For use in areas having extreme ambient temperatures such as those encountered in North Africa and the Middle East, the thickness of the fibreglass is at least 3 mm and the PVC foam is at least 50 mm thick. Therefore, the total thickness of the walls and floor of the enclosure is at least 56 mm and the roof 76 mm. An entrance door 13 in an end wall 11a is provided for access to the interior of the enclosure. The floor 10 is formed to provide a sump 14 for hydrophonic nutrient solution.

As an aid in cleaning and sterilising the unit, to prevent mold formation, all interior angles formed by the roof, side walls and floor and by the end walls and bottom surfaces of the sump are rounded to a minimum radius of 6 mm using fibreglass-filled resin which is smoothly finished and feathered against the adjacent surfaces.

The entire enclosure is supported by a steel subframe consisting of longitudinal I-beams 15 and transverse I-beams 16 extending between and spaced along the longitudinal I-beams 15.

In the presently preferred commercial embodiment of the apparatus of Figure 1, the unit is approximately 7 metres long, 3 metres wide and 3.3 metres high.

Refrigeration-heating units 17 extend through the end walls of the enclosure. These units include refrigeration systems of 9496-12661 Kjoules capacity each (depending on the expected ambient temperature conditions) and are also provided with heating coils. Circulation fans contained within the inner portion 17a of the units 17 circulate cooled or heated air throughout the enclosure. The refrigeration-heating units are thermostatically controlled to maintain the temperature within the unit to 20° ± 1°C under ambient temperature conditions ranging from 5°C to 55°C.

During the irrigation cycle, nutrient liquid contained in the sump 14 is withdrawn through a strainer 18 to the inlet of a centrifugal pump 19 which discharges the nutrient liquid under pressure into conduits 20 and 21 which feed horizontal nutrient distribution manifolds 22 extending lengthwise of the enclosure near the side walls 11. The nutrient solution is dispensed through spray nozzles 23 which project the nutrient liquid across the seed bed trays 24 to irrigate the seeds and the grass plants growing therefrom. A control panel 25 is located outside the access door 13 on the exterior of the unit and houses the thermostat controls, the timer controls for the pump and the circuit breakers for the electrical system of the unit. Fluorescent light fixtures 26 are provided at locations spaced along the interior side walls to provide the necessary light energy for optimum plant growth.

The growing trays 24 are supported toward their inner ends on horizontal rails 27 carried on support posts 28 and the outer ends of the growing trays 24 are supported on channel members 29 extending along and affixed to the interior surface of the side walls.

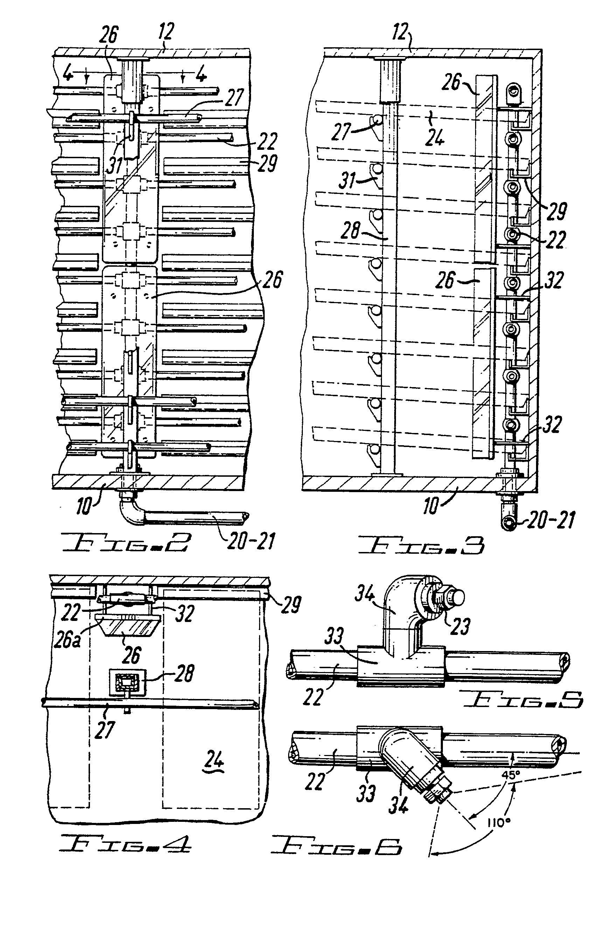

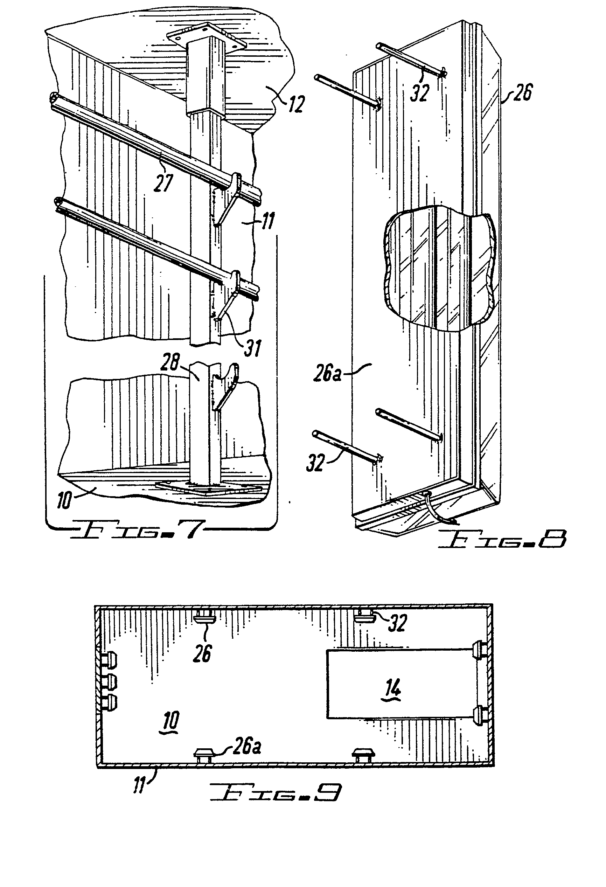

Further details of the installation of the nutrient supply system, the seed bed tray support system and the lighting system of the hydrophonic grass-growing unit of Figure 1 are supplied in Figures 2 to 9, in which like reference characters indicate the same elements in the several views.

The seed bed trays 24 (shown by dashed lines) rest on horizontal rails 27 carried in brackets 31 fixed to support posts 28 which extend from the floor 10 to the ceiling 12 of the enclosure. The outer edges of the trays 24 rest on the inner edge of horizontal channels 29 which are fixed to the side walls 11 of the enclosure. Elongate light fixtures 26 enclose fluorescent bulbs carried on the back 26a of the fixture. The sides and front of the fixture 26 are translucent. The fixtures 26 are supported by means of stand-offs 32 which extend between the side walls 11 of the enclosure and the backs 26a of the fixtures 26.

The plumbing for the nutrient liquid distribution system consists of the nutrient liquid distribution conduit 20—21 which extends horizontally from the pump 19 (Figure 1) upwardly through the floor 10 and carries nutrient liquid under pressure to the horizontal nutrient liquid distribution manifolds 22. Referring more specifically to Figures 5 and 6, spray nozzles 23 are carried by means of tees 33 and ells 34 at spaced points along the horizontal distribution manifolds 22. As shown in Figure 6, the spray nozzles 23 are directed at an angle to the distribution conduit 22 and produce a diverging spray pattern. The angle of divergence of the spray pattern and the angle which the spray nozzle makes with the distribution conduit 22 will vary according to the spacing of the nozzles 23 along the horizontal distribution conduits 22. The important criteria in selecting these angles and spacings is that the spray pattern emitted by each individual nozzle overlaps and interferes with the spray pattern from its next-adjacent nozzles. In this fashion, the interference between the spray patterns causes atomization of the nutrient liquid to form a fine mist which settles evenly upon the seeds and the growing grass plants. For example, in the presently preferred embodiment of this feature of the invention, we employ so-called "Vee-Jet" nozzles manufactured by Spraying Systems Co., of the U.S.A. (part No. H 1/4 VV-11004) which emit a diverging flat spray pattern at 28123 Kgms/m² of 110°. These nozzles angled at approximately 45° from the horizontal distribution manifold 22 (as shown in Figure 6) will produce the desired interference spray pattern when spaced apart 615 mm along the manifold 22. The essential distinction between the spray system employed in accordance with the present embodiment is that the nutrient liquid is sprayed horizontally across the growing trays with adjacent spray patterns interfering to atomize the nutrient liquid and form a fine mist, whereas in the prior art systems, the nutrient liquid was sprayed virtually downwardly onto the seeds and the growing grass plants. This made it impossible to achieve efficient even distribution of the nutrient liquid across the entire area of the seed bed since, as the seed in the trays germinates and grows upwardly toward the downwardly projecting spray nozzles, the effective area covered by the spray progressively decreases, leading to over-irrigation directly beneath the spray nozzle and dry spots spaced away from the projected centreline of the nozzle.

In summary, each of the above described improvements in the prior art apparatus for growing hydroponic grass can be related to the others and the improvements have the combined effect of increasing the long term productivity and reliability of operation of the apparatus. The improvements in the apparatus for distributing the hydroponic nutrient solution eliminate dry spots and wet spots in the seed bed, thereby improving overall plant growth rate and grass production rate, and also eliminate one of the major causes of poor germination (which causes seed decay) and overirrigation, both of which reduce production rate and promote mold growth. The improvements in the methods of supporting the trays and the lighting fixtures within the apparatus contribute materially to the ease with which the units may be sterilised and maintained in sterile condition, thus, again, reducing the likelihood of mold formation and concomitant reduction in the rate of grass production.

**Claims**

1. A hydroponic grass growing unit including floor, ceiling and side walls (11, 12) defining an enclosure, means in said enclosure for supporting a plurality of substantially horizontal seed bed trays in side-by-side relationship and extending inwardly from said side walls (11) to form elongate rows thereof along said side walls, said rows being spaced vertically apart from the floor to the ceiling (12) of said enclosure, a sump (14) in said floor for containing a hydroponic nutrient solution, means for periodically withdrawing a quantity of solution from said sump (14) in excess of that required to saturate the seeds in said trays and the grass plants growing therefrom and for applying said excess quantity thereto, and means (26) for supplying light to said growing plants, said means for withdrawing said solution and applying it to said seeds and grass plants including a plurality of spray nozzles (23) for projecting a substantially flat diverging spray pattern in a plane substantially parallel to said trays (24), the spray pattern for each one of said rows of trays being provided by a plurality of said nozzles characterized in that the nozzles (23) are spaced above said row and just below the row stacked vertically thereabove, the nozzles (23) for each one of said rows being spaced horizontally along one edge of said row to project said solution toward the opposite edge thereof, said horizontally spaced nozzles (23) being angularly directed toward a next-adjacent nozzle such that the spray patterns from pairs of adjacent nozzles converge above said row forming an interference pattern, causing said nutrient solution to form a fine mist which settles uniformly upon the seeds and plants in the row therebelow.

2. A hydroponic grass growing unit according to claim 1 in which the horizontally spaced nozzles (23) which form the interference spray pattern for each of said rows are carried by horizontal nutrient distribution manifolds (22) supported by and spaced inwardly from the side walls of said enclosure, the spacing between said horizontal distribution manifolds and said side walls being sufficient to permit hand-cleaning said side walls behind said horizontal manifolds.

3. A hydroponic grass growing unit as claimed in claim 1 or claim 2 characterised in that said means for supporting said seed bed trays comprise a plurality of vertical support posts (28) spaced inwardly from the side walls (11) of said enclosure a distance less than the length of said trays (24) and spaced horizontally along the length of said rows, a plurality of horizontal vertically spaced rails (27) carried by said support posts, the vertical spacing of such rails being equal to the desired vertical spacing of the rows of seed bed trays, the front ends of which are supported thereon, and means (29) carried by the side walls of said enclosure for supporting the rear end of said seed bed trays.

4. A hydroponic grass growing unit according to claim 3 in which the means (29) for supporting the rear ends of the seed growing trays in each of said rows comprise an upwardly opening horizontal channel member, one side of which is sealingly engaged and affixed to the side wall of said enclosure and the upper edge of the other side of which forms a support for the rear edges of the seed bed trays in each of said rows, said channel functioning to receive excess nutrient solution draining from the rear edges of said trays, to prevent said excess nutrient solution from falling on the trays in the next row therebelow.

5. A hydroponic grass growing unit as claimed in any preceding claim characterised in that the means for supplying light to said growing plants comprise a plurality of vertically elongate, hermetically sealed fluorescent fixtures (26) having translucent side and front walls to permit transmission of light from elongate fluorescent lightbulbs enclosed therewithin and supported on the back thereof, and stand-off members (32) sealingly engaged with and extending inwardly from said side walls to support said fixtures in said vertical position, the length of said stand-offs being sufficient to permit hand-cleaning of said side walls behind said fixtures.

**Patentansprüche**

1. Eine hydroponische Grasanbaueinheit enthaltend einen Boden, Decken- und Seitenwände (11, 12), die ein Gehäuse begrenzen Mittel in besagtem Gehäuse zum Abstützen einer Mehrzahl von im wesentlichen horizontalen Treibbeetschalen, die nebeneinander angeordnet sind und sich von den Seitenwänden (11) nach innen erstrecken, so daß sie entlang der Seitenwände längliche Reihen bilden, wobei diese Reihen vom Boden bis zur Decke (12) dieses Gehäuse im Abstand voneinander senkrechten angeordnet sind, einen Auffangbehälter (14) im Boden zur Aufnahme einer hydroponischen Nährlösung, Mittel zur periodischen Entnahme einer Menge Lösung aus diesem Auffangbehälter (14), die die zur Sättigung der Saat in den Schalen und der daraus wachsenden, Graspflanzen erforderliche Menge übersteigt und zum Aufgebe dieser Überschußmenge auf diese Saat und Planzen und Mittel (26) zur Lichtbeschaffung für die wachsenden Pflanzen wobei die Mittel zur Entnahme der Lösung und zur Aufgabe dieser Lösung auf die Saat und Graspflanzen eine Mehrzahl von Sprühdüsen (23) enthalten zum Aussprühen eines im wesentlichen flach auseinanderlaufenden Sprühmusters in einer zu den Schalen (24) im wesentlichen parallelen Ebene, wobei das Sprühmuster für jede der besagten Reihen von Schalen durch eine Mehrzahl von diesen Düsen geschaffen wird, dadurch gekennzeichnet, daß die Düsen (23) im Abstand über besagter Reihe und kurz unter der senkrecht, darüberliegenden Reihe angeordnet sind, wobei die Düsen (23) für jede der Reihen in horizontalem Abstand voneinander längs einer Kante der besagten Reihe angeordnet sind, so daß die Lösung zu deren gegenüberleigender Kante gespritzt wird, und die im horizontalen Abstand angeordneten Düsen (23) winkelmäßig auf eine daneben liegende Düse gerichtet sind, so daß die von Paaren nebeneinander liegender Düsen gebildeten Sprühmuster über der Reihe zusammenlaufen und so Interferenzmuster bilden, wodurch bewirkt wird, daß die Nährlösung einen feinen Nebel bildet, der sich gleichmäßig auf der Saat und Pflanzen in der darunterliegenden Reihe absetzt.

2. Eine hydroponische Grasanbaueinheit nach Anspruch 1, in der die im horizontalen Abstand angeordneten Düsen (23), die für jede der Reihen die Interferenzsprühmuster bilden, von horizontalen Nährlösungs-Verteilerarmaturen (22) getragen werden, die von den Seitenwänden des Gehäuses gestützt werden, von denen sie mit Abstand nach innen angeordnet sind, wobei der Abstand zwischen den horizontalen Verteilerarmaturen und den Seitenwänden ausreicht, um eine Reinigung der Seitenwände von Hand hinter den horizontalen Armaturen zu gestatten.

3. Eine hydroponische Grasanbaueinheit gemäß Anspruch 1 oder 2, dadurch gekennzeichnet, daß die Mittel zum Abstützen der Treibbeetschalen eine Mehrzahl senkrechter Tragsäulen (28), die von den Seitenwänden (11) des Gehäuses nach innen in einem Abstand angeordnet sind, der geringer ist als die Länge der Schalen (24), und die horizontal im Abstand entlang der Längsseite der Reihen angeordnet sind, eine Mehrzahl horizontaler im senkrechten Abstand angeordneter Schienen (27) die von den Tragsäulen getragen werden, wobei der senkrechte Abstand solcher Schienen gleich dem gewünschten senkrechten Abstand der Reihen von Treibbeetschalen ist, deren vordere Enden darauf abgestützt sind, und Mittel (29) enthalten, die an den Seitenwänden des Gehäuses sitzen zum Abstützen des hinteren Endes der Treibbeetschalen.

4. Eine hydroponische Grasbaueinheit nach Anspruch 3, in der die Mittel (29) zum Abstützen des hinteren Endes der Treibbeetschalen in jeder Reihe ein nach oben öffnendes horizontales Kanalglied enthalten, dessen eine Seite dichtend an der Seitenwand des Gehäuses anliegt und befestigt ist und dessen andere Seite mit ihrer oberen Kante eine Stütze für die hinteren Kanten der Treibbeetschalen in jeder Reihe bildet, wobei die Aufgabe des Kanals darin besteht, die von den hinteren Kanten der Schalen ablaufende überschüssige Nährlösung aufzunehmen, damit verhindert wird, daß diese überschüssige Nährlösung auf die Schalen der nächsten darunterliegenden Reihe fällt.

5. Eine hyproponische Grasanbaueinheit nach einem der vorstehenden Ansprüche, dadurch gekennzeichnet, daß die Mittel zur Lichtbeschaffung für die angebauten Pflanzen eine Mehrzahl vertikal länglicher, hermetisch abgedichteter Leuchtstoffleuchten (26) mit lichtdurchlässigen Seiten- und Vorderwänden, um die Lichtübertragung von den darin enthaltenen und auf deren Rückseite abgestützten langgestreckten Leuchtstoffröhren zu gestatten, vorstehende Teile (32) enthalten, die sich von den Seitenwänden nach innen erstrecken und dichtend daran anliegen, so die Leuchten in senkrechter Lage gehalten werden, wobei die Länge der vorstehenden Teile ausreicht, um eine Reinigung der Seitenwände hinter den Leuchten von Hand su gestatten.

## Revendications

1. Installation pour la culture hydroponique de fourrage, comprenant une surface de base, un plafond et des parois latérales (11, 12) formant une enceinte, des dispositifs prévus dans cette enceinte pour soutenir côte à côte und série de plateaux essentiellement horizontaux contenant des lits de graines, ces plateaux s'étendant vers l'intérieur depuis les parois latérales (11) et formant de longues rangées le long de ces parois, ces rangées étant espacées en direction verticale depuis la surface de base jusqu'au plafond (12) de l'enceinte, un puisard (14) prévu dans la surface de base pour contenir une solution nutritive hydroponique, un dispositif pour prélever périodiquement une quantité de solution hors du puisard (14), en excès de la quantité nécessaire pour la saturation des graines se trouvant dans les plateaux et des plantes à fourrage en cours de croissance, et pour appliquer cette quantité excédentaire à ces graines et à ces plantes, et des dispositifs (26) fournissant de la lumière aux plantes en croissance, le dispositif prévu pour prélever la solution susdite et l'appliquer aux semences et aux plantes à fourrage comprenant une série d'adjutages de pulvérisation (23) destinés à projeter une structure de pulvérisation essentiellement plane et divergente, dans un plan essentiellement parallèle aux plateaux (24), la structure de pulvérisation pour chacune des rangées de plateaux étant fournie par une série de ces ajutages, cette installation étant caractérisée en ce que les ajutages (23) sont disposés au-dessus de la rangée et juste en dessous de la rangée immédiatement supérieure, les ajutages (23) pour chacune des rangées étant espacés en direction horizontale le long d'un bord de la rangée afin de projeter la solution susdite vers l'autre bord de cette même rangée, les ajutages (23) espacés en direction horizontale étant dirigés angulairement vers un ajutage immédiatement voisin, de sorte que les structures de pulvérisation provenant de paires d'ajutages adjacents convergent au-dessus de la rangée en formant une structure à interférence, ce qui amène la solution nutritive à former un brouillard fin qui se dépose de façon uniforme sur les graines et sur les plantes de la rangée se trouvant en dessous.

2. Installation pour la culture hydroponique de fourrage suivant la revendication 1, caractérisée en ce que les ajutages (23) espacés en direction horizontale, qui forment le dessin de pulvérisation à interférence pour chacune des rangées susdites, sont portés par des tubulures (22), horizontales de distribution de solution nutritive, ces tubulures étant supportées par les parois latérales de l'enceinte en étant espacées vers l'intérieur par rapport à ces parois, l'espacement prévu entre les tubulures horizontales de distribution et les parois latérales étant suffisant pour permettre un nettoyage manuel de ces parois latérales à l'arrière des tubulures horizontales.

3. Installation pour la culture hydroponique de fourrage suivant la revendication 1 ou la revendication 2, caractérisée en ce que les dispositifs prévus pour supporter les plateaux à lits de graines comprennent une série de piliers de support verticaux (28) espacés intérieurement par rapport aux parois latérales (11) de l'enceinte, d'une distance inférieure à la longueur de ces plateaux (24), et espacés en direction horizontale suivant la longueur des rangées susdites, une série de rails horizontaux (27) espacés en direction verticale et portés par ces piliers de support, l'espacement vertical de ces rails étant égal à l'espacement vertical désiré des rangées de plateaux à lits de graines, dont les extrémités avant sont soutenues sur les rails, et des moyens (29) portés par les parois latérales de l'enceinte pour soutenir l'extrémité arrière des plateaux à lits de graines.

4. Installation pour la culture hydroponique de fourrage suivant la revendication 3, caractérisée en ce que les moyens (29) prévus pour supporter les extrémités arrière des plateaux de culture de graines dans chacune des rangées susdites consistent en un élément à section en U, horizontal, à ouverture orientée vers le haut, dont une aile est en contact étanche avec la paroi latérale de l'enceinte et fixée à cette paroi, et dont le bord supérieur de l'autre aile constitue un support pour les bords arrière des plateaux à lits de graines dans chacune des rangées, l'élément à section en U fonctionnant comme récepteur de l'excès de solution nutritive s'égouttant des bords arrière des plateaux, afin d'empêcher cet excès de solution nutritive de tomber sur les plateaux de la rangée immédiatement inférieure.

5. Installation pour la culture hydroponique de fourrage suivant l'une quelconque des revendications précédentes, caractérisée en ce que les dispositifs prévus pour fournir de la lumière aux plantes en cours de croissance comprennent une série d'appareils à fluorescence (26) hermétiquement fermés, dont la longueur est orientée vers le haut, comportant des parois latérales et avant translucides, permettant la transmission de lumière depuis de longs tubes fluorescents enfermés dans ces appareils et supportés sur l'arrière de ceux-ci, et des éléments d'écartement (32) qui sont en contact étanche avec les parois latérales et s'étendent vers l'intérieur depuis celles-ci, pour soutenir les appareils d'éclairage susdits dans la position verticale, la longueur de ces éléments d'écartement étant suffisante pour permettre un nettoyage manuel des parois latérales susdites à l'arrière de ces appareils d'éclairage.

Fig-1

FIG.2

FIG.3

FIG.4

FIG.5

FIG.6

FIG-7

FIG-8

FIG-9